# EUROPEAN PATENT APPLICATION

(11) **EP 3 514 784 A1**
(43) Date of publication of application: **24.07.2019**
(21) Application number: 18759014.6
(22) Date of filing: 05.01.2018
(51) Int. Cl.: G09F 9/33

(54) **LAYERED DYNAMIC IMAGE DISPLAY DEVICE**

(30) Priority: 22.11.2017 CN 201711171705
(71) Applicant: Liang, Yuexing, Gaoming District Foshan City, Guangdong 528500 (CN); Li, Haijian, Guigang City, Guangxi 537100 (CN)
(72) Inventor: LIANG, Yuexing, Foshan City, Guangdong 528500 (CN); LI, Haijian, Guigang City, Guangxi 537100 (CN)
(74) Representative: Hübner, Gerd
(86) International application number: PCT/CN2018/071476
(87) International publication number: WO 2019/100549

(57) **Abstract**

The present disclosure discloses a multi-layer display device for animation, comprising: a light guiding plate, a controller and a light source, a teletext is provided on the light guiding plate, a display panel assembly is formed by several light guiding plates having different teletexts in forms of lamination, the light source, which can be independently controlled, is provided on at least one side edge of each light guiding plate, light emitted from the light source is irradiated into the light guiding plate through the side edge, the light source is electrically connected to the controller. Multi-layer display device for animation of present disclosure has a simple structure, lower cost, and a dynamic display effect.

## Description

### TECHNICAL FIELD

The present disclosure pertains to the field of display device, and specifically relates to a multi-layer display device for animation.

### BACKGROUND

With rapid development of LED technology in the past few decades, in addition to illumination field, LED is increasingly applied in dynamic display of advertising information, especially with the increasing maturity of color LED display technology. LED display screen is a tablet display and consists of several small LED module panels to display various information, such as text, images, video signals and etc. Luminescent material applied to display screen comprises the following forms: ① LED luminescent lamp (or refers to monolithic lamp), which consists of a monolithic LED wafer, reflective cup, metal anode and metal cathode, and outer package has an epoxy resin housing capable of transmitting and concentrating light. One or more (different colors) monolithic lamps can be used to form a basic pixel, which is mostly used for outdoor display screen because of its high luminance. ② LED lattice module, in which a luminous matrix is composed of several wafers, encapsulated in a plastic shell with epoxy resin. It is suitable for ranks scan driven, easy to form a high-density display screen, and primarily used for indoor display screen. ③ patch-style LED luminescent lamp (or refers to SMD LED), i.e. the encapsulation of LED luminescent lamp is in the form of stick welding, which can be used for indoor full-color display screen, and allow for single-point maintenance, so it can effectively solve the mosaic phenomenon. No matter which kind of structure of the LED display is employed, the display module is composed of a large number of light-emitting diodes, besides the manufacture process is complex, and the manufacture requirement is high, so there is a problem of higher cost, especially price disadvantage will be apparent when applied to a large area display. Once the light-emitting diodes are damaged, the maintenance price is higher.

### SUMMARY

The problems to be solved in present disclosure is to provide a multi-layer display device for animation having a simple structure, lower cost, and a dynamic display effect.

To solve the above problems, the technical solution of present disclosure is:
a multi-layer display device for animation comprises a light guiding plate, a controller and a light source, a teletext is provided on the light guiding plate, a display panel assembly is formed by several light guiding plates having different teletexts in the form of lamination, the light source, which can be independently controlled, is provided on at least one side edge of each light guiding plate, light emitted from the light source is irradiated into the light guiding plate through the side edge, the light source is electrically connected to the controller.

Preferably, the light guiding plate is one of transparent acrylic plate, glass plate, resin plate, plastic plate, crystal or film.

Preferably, the light guiding plate has a cylindrical shape, and several cylindrical light guiding plates are provided from inside to outside in the form of lamination.

Preferably, there is a gap between adjacent two light guiding plates, the gap has a distance of not more than 1mm.

Preferably, teletext is a concave and/or convex teletext, light emitted from the light source is refracted and/or reflected light while being projected onto the teletext.

Preferably, the teletext is formed on a surface of the light guiding plate by laser spotting.

Preferably, the light source is an LED lamp bead or LED module.

Preferably, the controller is a single chip microcontroller.

Preferably, a PWM drive circuit is further electrically connected between the single chip microcontroller and the light source.

Preferably, a shutter is furhter provided between side edges of the adjacent two light sources.

With the above technical solution, an integral display panel assembly is formed by several light guiding plates having different teletexts in the form of lamination, and the teletext on the multi-layer light guiding plate can be configured as a static frame teletext which presents dynamic action from inside to outside or from outside to inside. Individual light sources provided on side edge of each light guiding plate irradiate onto the corresponding light guiding plate, as the face of light guiding plate comprises a teletext, illuminated potion of the teletext of the light guiding plate can be displayed when each individual light source illuminates the rough teletext on the light guiding plate. Microcontroller controls switch on-off of each individual light source according to the preset control sequence and timing. Several light sources are sequentially turned on and off according to the signal of the controller to irradiate the corresponding light guiding plates respectively. Each layer of the multi-layer light guiding plate is sequentially irradiated to form a continuous dynamic display teletext. The overall structure is simple, and the display effect is good. The above display device for animation can be applied to various types of indoor and outdoor dynamic billboards, signage, decoration, ornaments, signboards and etc., which has a wide range of applications.

### BRIEF DESCRIPTION OF THE DRAWING

FIG. 1 is a structural schematic diagram of the embodiment 1 of the multi-layer display device for animation;
FIG. 2 is an exploded view of the embodiment 1 of the multi-layer display device for animation;
FIG. 3 is a structural schematic diagram of the embodiment 2 of the multi-layer display device for animation.

### DETAILED DESCRIPTION OF THE EMBODIMENTS

Detailed description of the present invention will be further described below with reference to the accompanying drawings. It should be stated that the purpose of illustration of these implementations is to facilitate understanding the present invention and not to limit the invention. Additionally, involved technical features in each implementations of present invention described below can be combined as long as they do not conflict with each other.

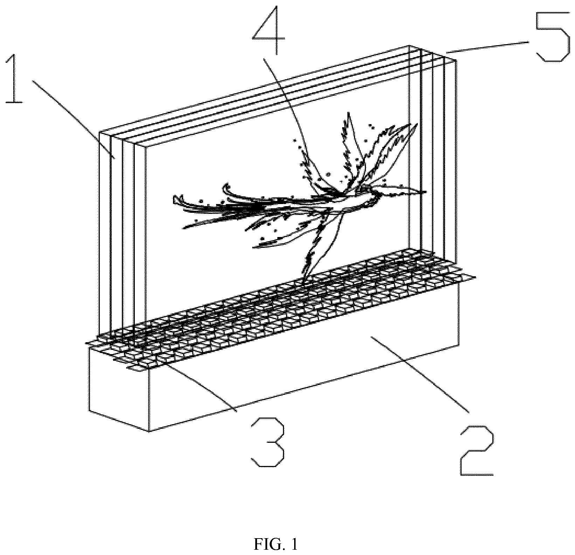

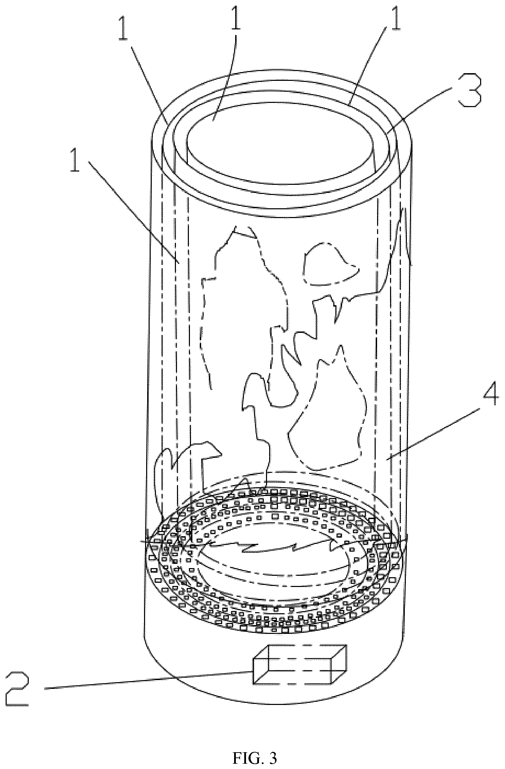

As shown in Figures 1-3, a multi-layer display device for animation of the present disclosure comprises: a light guiding plate 1, a controller 2 and a light source 3, wherein a teletext 4 is provided on the light guiding plate 1, a display panel assembly 5 is formed by several light guiding plates 1 having different teletexts 4 in the form of lamination, the light source 3, which can be independently controlled, is provided on at least one side edge of each light guiding plate 1, light emitted from the light source 3 is irradiated into the light guiding plate 1 through the side edge, the light source 3 is electrically connected to the controller 2. An integral display panel assembly 5 is formed by several light guiding plates 1 having different teletexts in the form of lamination, and the teletext on the multi-layer light guiding plate 1 can be configured as a static frame teletext 4 which presents dynamic action from inside to outside or from outside to inside. Individual light source 3 provided on side edge of each light guiding plate 1 irradiate onto the corresponding light guiding plate, as the teletext with rough surface 4, like uneven spot, is provided on light guiding plate 1. When light transmit past the spot position of the teletext, straight-line path of light is interfered to create reflex phenomenon such as refraction, diffuse reflection and etc. In the view of visual effect, it seems that the teletext is illuminated and presented to users. The teletext 4 can be concave spot, and also can be convex spot. Light source 3 irradiates the teletext 4 to refract light, or reflect light into eyes in operation. For example, teletexts on each light guiding plates are designed as a series of images constituting dynamic actions such as continuous burning fire, running person and etc. When every individual light source irradiates the teletext on light guiding plates, the teletext could only display illuminated teletext portion immediately. Controller 2 controls switch on-off of each individual light source. Several light sources 3 are sequentially turned on and off according to the signal of the controller 2 to irradiate the corresponding light guiding plates 1 respectively. Each layer of the multi-layer light guiding plate 1 is sequentially illuminated so as to present different pictures to form a continuous dynamic display teletext. The overall structure is simple, and the display effect is good. Additionally, individual light source could be configured as multi-line light sources on a piece of substrate corresponding to light guiding plates 1. Controller 2 is electrically connected to each line of light source and controls switch on-off of each line of light source.

As embodiment 1 shown in Figure 1, the light guiding plates 1 of the embodiment is a transparent acrylic plate on which surface the teletext 4 is formed by laser spotting. Such as teletext on several light guiding plates 1 can be designed as static frames of a series of coherent motions of flying phoenix. Each individual light source 3 sequentially irradiated corresponding light guiding plates 1, and each frame of multi-layer light guiding plates 1 sequentially illuminated to form a coherent dynamic motion of flying phoenix. The method of the embodiment has a realistic effect. It can also employ transparent material, such as glass plate, resin plate, plastic plate, crystal or film when implementing this embodiment. It can also manufacture rough teletext on the surface of light guiding plates 1 by printing, depicting, or depanning with mould thereon.

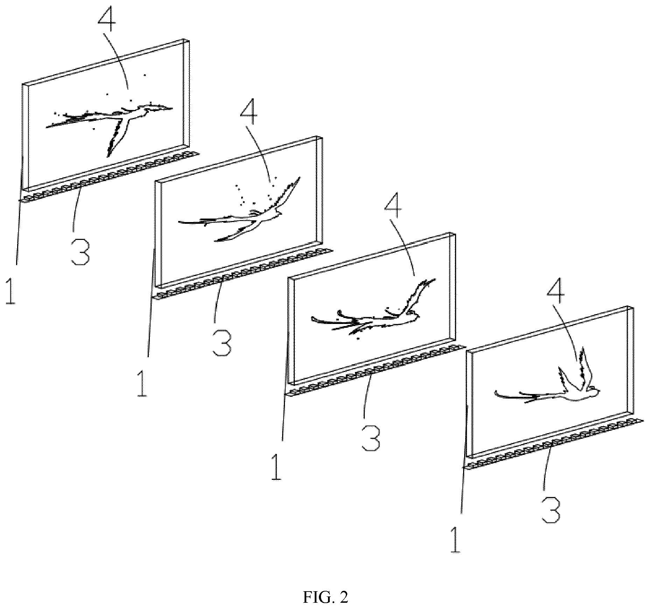

As embodiment 2 shown in Figure 2, the light guiding plates 1 of the embodiment has a cylindrical shape, and several cylindrical light guiding plates 1 are provided from inside to outside in the form of lamination. Additionally, the light guiding plates 1 can be designed as fan-shape, trapezoidal, square or flat graphics according to actual requirement of display so as to increase usage scenario. Single chip microcontroller is employed as the controller 2 of light guiding plates 1. The teletexts on the light guiding plates 1 of the embodiment are static frames of a series of actions of burning fire. Each individual light source 3 is sequentially or disorderly on/off by the controller 2 respectively. Separate fire patterns on multi-layer light guiding plates 1 is illuminated. Different light guiding plates 1 disorderly illuminated can form a dynamic burning fire in different forms through permutations and combinations. The illuminated fire has a realistic effect. Identical light sources 3 are provided at both sides of light guiding plates 1. The two light sources 3 are connected to a signal output port of the same single chip microcontroller. Light sources 3 receive signals of the same frequency-occupation ratio to turn on or off light sources 3 at the same time. It can increase the luminance of the illuminated teletext to make the teletext on the light guiding plates 1 more clear.

Additionally, it can employ an LED lamp bead or LED module as the light source 3. The LED module is electrically connected to drive power. PWM drive circuit is further electrically connected between the single chip microcontroller 2 and the light source 3. The single chip microcontroller outputs regulate signal to control that the PWM drive circuit outputs signal which in turn controls the light source 3 to sequentially or disorderly turn on or off. PWM outputs signal is stable that can make the pattern illuminated on the light guiding plates 1 coherent and smooth. There is a gap between the adjacent two light guiding plates 1, and a distance therebetween is not more than 1mm in order to reduce the impact of adjacent light sources 3 to the light guiding plate 1 and reduce undesired effect of residual images. A shutter is provided between the light sources 3 corresponding to adjacent two light guiding plates 1. It can prevent light leakage of light source 3 to be projected to adjacent light guiding plates 1 to bring out residual images. A light-insulation layer is provided on outer surface of lower section between adjacent two light guiding plates 1. The light-insulation layer can be a coating at lower section of one of the two light guiding plates, or also can be a material provided at lower section of the adjacent two light guiding plates, such as light-insulation film and etc. The light-insulation layer is provided at lower section of the light guiding plates, adjacent to the root portion, and can prevent light from interfering each other between adjacent two light guiding plates.

The implementations of the present invention have been described above in detail with reference to the accompanying drawings, but the present invention is not limited to the implementations described. For those skilled in the art, various variations, modifications, substitutes and variations of these implementations are within the scope of the present invention without departing from the principle and spirit of the present invention.

## Claims

1. A multi-layer display device for animation, wherein comprising a light guiding plate (1), a controller (2) and a light source (3), a teletext (4) is provided on the light guiding plate (1), a display panel assembly (5) is formed by several light guiding plates (1) having different teletexts (4) in the form of lamination, the light source (3), which can be independently controlled, is provided on at least one side edge of each light guiding plate (1), light emitted from the light source (3) is irradiated into the light guiding plate (1) through the side edge, the light source (3) is electrically connected to the controller (2).

2. The multi-layer display device for animation according to claim 1, wherein the light guiding plate (1) is one of transparent acrylic plate, glass plate, resin plate, plastic plate, crystal or film.

3. The multi-layer display device for animation according to claim 1, wherein the light guiding plate (1) has a cylindrical shape, and several cylindrical light guiding plates (1) are provided from inside to outside in the form of lamination.

4. The multi-layer display device for animation according to claim 1, wherein there is a gap between adjacent two light guiding plates (1), the gap has a distance of not more than 1mm.

5. The multi-layer display device for animation according to claim 1, wherein the teletext (4) is a concave and/or convex teletext, light emitted from the light source (3) is refracted and/or reflected light while being projected onto the teletext (4).

6. The multi-layer display device for animation as in one of claims 1 to 4, wherein the teletext (4) is formed on a surface of the light guiding plate (1) by laser spotting.

7. The multi-layer display device for animation according to claim 1, wherein the light source (3) is an LED lamp bead or LED module.

8. The multi-layer display device for animation according to claim 1, wherein the controller (2) is a single ship microcontroller.

9. The multi-layer display device for animation according to claim 8, wherein a PWM drive circuit is further electrically connected between the single ship microcontroller and the light source (3).

10. The multi-layer display device for animation as in one of claims 1 to 4, wherein a shutter is further provided between side edges of the adjacent two light sources (3).
